# EUROPEAN PATENT SPECIFICATION

(11) **EP 2 365 569 B1**
(45) Date of publication and mention of the grant of the patent: **28.03.2018**
(21) Application number: 11250150.7
(22) Date of filing: 10.02.2011
(51) Int. Cl.: H01M 8/1004, H01M 8/1025, H01M 4/88

(54) **A membrane-electrode assembly for a fuel cell**
Membran-/Elektrodeneinheit für eine Brennstoffzelle
Ensemble membrane-électrode pour pile à combustible

(30) Priority: 10.03.2010 US 312590 P; 21.10.2010 US 909693
(43) Date of publication of application: 14.09.2011
(73) Proprietor: Kolon Industries, Inc., Gwacheon-si, Gyeonggi-do 13837 (KR)
(72) Inventor: Kim, Hee-Tak, Yongin-si Gyeonggi-do (KR); Cho, Sung-Yong, Yongin-si Gyeonggi-do (KR); Kim, Tae-Yoon, Yongin-si Gyeonggi-do (KR); Han, Sang Il, Yongin-si Gyeonggi-do (KR); Song, Kah-Young, Yongin-si Gyeonggi-do (KR); Chai, Geun-Seok, Yongin-si Gyeonggi-do (KR); Min, Myoung-Ki, Yongin-si Gyeonggi-do (KR)
(74) Representative: Mounteney, Simon James

(56) References cited:
- WO-A1-99/45606
- WO-A1-2005/034270
- WO-A2-2006/029185
- JP-A- H07 130 372
- JP-A- 2000 208 151
- JP-A- 2005 063 832
- US-A1- 2009 263 699

## Description

### BACKGROUND OF THE INVENTION

### (a) Field of the Invention

This disclosure relates to a membrane-electrode assembly for a fuel cell, a method of manufacturing a membrane-electrode assembly for a fuel cell, and a fuel cell system.

### (b) Description of the Related Art

A fuel cell is a power generation system for producing electrical energy through an electrochemical redox reaction, for example of hydrogen (optionally supplied in the form of a hydrocarbon-based material) and oxygen supplied separately.

Typical examples of a fuel cell are polymer electrolyte membrane fuel cells (PEMFC) and direct oxidation fuel cells (DOFC).

The polymer electrolyte membrane fuel cells include a stack as the main body of a fuel cell and generate electrical energy through an electrochemical reaction between hydrogen supplied from a reformer and oxygen from an air pump or a fan. The direct oxidation fuel cells generate electrical energy through an electrochemical reaction between a fuel and oxygen supplied separately.

In a fuel cell, a stack includes several to scores of stacked unit cells, and each unit cell is made up of a membrane-electrode assembly (MEA) and a separator. The membrane-electrode assembly includes a polymer electrolyte membrane, a pair of catalyst layers disposed on both sides of the polymer electrolyte membrane, and a gas diffusion layer respectively disposed outside of the catalyst layers.

US2009/0263699 and WO2005/034270 disclose a membrane for a polymer electrolyte fuel cell.

### SUMMARY OF THE INVENTION

The present invention provides a membrane-electrode assembly for a fuel cell, a method for manufacturing the membrane-electrode assembly, and a fuel cell system comprising the membrane-electrode assembly, as defined in the appended set of claims.

One aspect of the present invention provides a membrane-electrode assembly for a fuel cell that has improved proton transport and adhesion strength at an interface by maximizing the adhesion area between the polymer electrolyte membrane and a catalyst layer.

Another aspect of the present invention provides a method of fabricating the membrane-electrode assembly having improved proton transport and adhesion strength at an interface.

Yet another aspect of the present invention provides a fuel cell system having improved output due to decreased interface resistance.

According to the present invention, there is provided a membrane-electrode assembly for a fuel cell comprising, in order:
an anode substrate;
an anode catalyst layer;
a polymer electrolyte membrane;
a cathode catalyst layer; and
a cathode substrate,
wherein an adhesive layer is provided between the anode catalyst layer and the polymer electrolyte membrane and/or between the cathode catalyst layer and the polymer electrolyte membrane, and
wherein the or each adhesive layer is permeated into the surface pores of the respective catalyst layer and the adhesive layer fills empty spaces between catalyst particles at the surface of the catalyst layer, and the space between the catalyst layer and the polymer electrolyte membrane.

According to one aspect of the present invention, there is provided a membrane-electrode assembly that includes a cathode and an anode facing each other; a polymer electrolyte membrane interposed between the cathode and anode, and an adhesive layer between the polymer electrolyte membrane and the catalyst layer. The cathode includes a cathode substrate and a cathode catalyst layer, and the anode includes an anode substrate and an anode catalyst layer. The polymer electrolyte membrane and the catalyst layer have an interface where the adhesive layer is permeated into the catalyst layer.

The adhesive layer preferably has an average thickness of from about 20 to about 1,000 nm. The adhesive layer preferably permeates into the catalyst layer to a depth ranging from about 1 to about 10 % based on the entire thickness of the catalyst layer. The adhesive layer may include a polymer selected from the group consisting of the material used as a binder for the anode and/or cathode catalyst layer, the polymer used to form the polymer electrolyte membrane, and combinations thereof. The adhesive layer may include a proton conductive perfluoro polymer.

The catalyst layer may include a metal catalyst selected from the group consisting of platinum, ruthenium, osmium, a platinum-ruthenium alloy, a platinum-osmium alloy, a platinum-palladium alloy, a platinum-M alloy (M is a transition element selected from the group consisting of gallium (Ga), titanium (Ti), vanadium (V), chromium (Cr), manganese (Mn), iron (Fe), cobalt (Co), nickel (Ni), copper (Cu), zinc (Zn), and combinations thereof), and combinations thereof.

The polymer electrolyte membrane may include a polymer including a main chain selected from the group consisting of aryleneether, arylenesulfone, arylenesulfide, benzimidazole, imide, etherimide, aryleneethersulfone, aryleneetherketone, aryleneether-etherketone, phenylquinoxaline, and combinations thereof, and a proton conductive group.

The polymer electrolyte membrane may include a polymer including a structural unit represented by the following Chemical Formula 1.

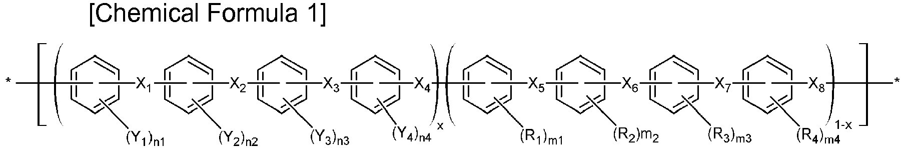

In the above Chemical Formula 1,
X₁ to X₈ are the same or different, and selected from the group consisting of O, S, CO, SO₂, and CRR' (where R and R' are the same or different, and selected from the group consisting of hydrogen, a C₁ to C₁₀ alkyl group, or a C₁ to C₁₀ fluoroalkyl group),
Y₁ to Y₄ are the same or different, and selected from the group consisting of hydrogen, a C₁ to C₁₀ alkyl group, or a C₁ to C₁₀ fluoroalkyl group, or a proton conductive group, provided that at least one of Y₁ to Y₄ is a proton conductive group,
n1 to n4 are the same or different, and are integers ranging from 1 to 4,
R₁ to R₄ are the same or different, and are selected from the group consisting of hydrogen, a C₁ to C₁₀ alkyl group, or a C₁ to C₁₀ fluoroalkyl group,
m1 to m4 are the same or different, and are integers ranging from 1 to 4, and
x ranges about 0.1 to about 0.9.

According to yet another aspect of the present invention, a method of manufacturing a membrane-electrode assembly for a fuel cell is provided that includes disposing an adhesive layer on a catalyst layer disposed on a cathode or an anode; and combining the catalyst layer coated with the adhesive layer and the polymer electrolyte membrane. According to one aspect, the method comprises:
forming an anode catalyst layer on an anode substrate;
forming a cathode catalyst layer on a cathode substrate;
applying an adhesive layer to the cathode catalyst layer and/or to the anode catalyst layer in a manner effective to permeate the adhesive layer into the surface pores of the respective catalyst layer;
and then adhering the anode catalyst layer and the cathode catalyst layer to either side of a polymer electrolyte membrane.

The adhesive layer is applied using a gel-phase adhesive layer composition or the adhesive layer is applied by spray-coating of an adhesive layer composition. The average thickness of the adhesive layer may be from about 20 to about 1,000 nm. The adhesive layer may include a polymer selected from the group consisting of the material used as a binder for the anode and/or cathode catalyst layer, the polymer used to form the polymer electrolyte membrane, and combinations thereof. The adhesive layer may include a proton conductive perfluoro polymer.

According to still another aspect of the present invention, a fuel cell system is provided that includes at least one electrical generator, a fuel supply, and an oxidizing agent supply. The at least one electrical generator includes one or more membrane-electrode assemblies according to the present invention, and one or more respective separators.

The membrane-electrode assembly for a fuel cell according to the present invention has improved proton transport and increased adhesion strength at an interface by maximizing the adhesion area at the interface of a polymer electrolyte membrane and a catalyst layer. The fuel cell system has improved output due to the decreased interface resistance.

### BRIEF DESCRIPTION OF THE DRAWINGS

FIG. 1 is a schematic diagram showing the interface structure of a polymer electrolyte membrane, an adhesive layer, and a catalyst layer in a membrane-electrode assembly for a fuel cell according to one embodiment of the present invention.
FIG. 2 is a schematic view showing the structure of a fuel cell system according to another embodiment of the present invention.
FIG. 3 is a scanning electron microscope (SEM) photograph showing the interface structure of a polymer electrolyte membrane, an adhesive layer, and a catalyst layer in a membrane-electrode assembly for a fuel cell according to one embodiment of the present invention.
FIG. 4 is a graph comparing the current-voltage characteristics of the single cells according to Example 1 and Comparative Example 1.
FIG. 5 is a graph comparing the AC impedance of single cells according to Example 1 and Comparative Example 1 under a 300 mA/cm² constant current condition.

**<Description of Reference Numerals Indicating Primary Elements in the Drawings>**

| | |
|---|---|
| 100: polymer electrolyte membrane | 200: adhesive layer |
| 250: interface | 300: catalyst particles |
| 400: substrate | 1: fuel cell system |
| 3: electrical generator | 5: fuel supplier |
| 7: oxidizing agent supplier | 9: fuel tank |
| 11: fuel pump | 13: oxidizing agent pump |
| 15: stack | 17: membrane-electrode assembly |
| 19, 19': separator | |
| 500: interface structure | |
| 510: | polymer electrolyte membrane |
| 520: | adhesive layer |
| 530: | catalyst layer |

### DETAILED DESCRIPTION

Certain preferred embodiments of the present invention will be described more fully hereinafter with reference to the drawings, in which certain specific embodiments are shown by way of example. The present invention is , however, not to be construed as being limited to the specific embodiments set forth herein.

As used herein, when a specific definition is not otherwise provided, the term "arylene" refers to a C₆ to C₃₀ arylene group, the term "alkyl" refers to a C₁ to C₁₀ alkyl group, and the term "alkoxy" refers to a C₁ to C₁₀ alkoxy group.

A membrane-electrode assembly for a fuel cell according to one embodiment includes a cathode and an anode facing each other; and a polymer electrolyte membrane interposed between the cathode and the anode; and an adhesive layer disposed between the polymer electrolyte membrane and a catalyst layer. The cathode includes a cathode substrate and a cathode catalyst layer, and the anode includes an anode substrate and an anode catalyst layer. The catalyst layer and the adhesive layer have an interface where the adhesive layer is permeated into the catalyst layer.

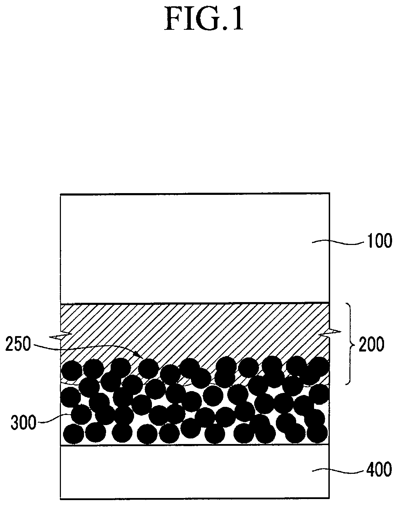

FIG. 1 is a schematic diagram of the interface structure of a polymer electrolyte membrane, an adhesive layer, and a catalyst layer in a membrane-electrode assembly for a fuel cell according to one embodiment of the present invention.

As shown in FIG. 1, a membrane-electrode assembly for a fuel cell according to one embodiment of the present invention includes an adhesive layer 200 between a polymer electrolyte membrane 100 and a catalyst layer formed by catalyst particles 300. The membrane-electrode assembly depicted in FIG. 1 also includes a substrate 400.

The catalyst particles 300 and the adhesive layer 200 have an interface 250 where the adhesive layer 200 is formed to overlap with and/or to permeate the surface of the catalyst layer, formed by the catalyst particles, to a predetermined depth.

The adhesive layer 200 fills empty spaces (pores) between catalyst particles 300 at the surface of the catalyst layer, and the space between the catalyst layer and the polymer electrolyte membrane 100, and thus can maximize the effective contact area between the catalyst particles 300 and the polymer electrolyte membrane 100. Since there is no empty space between the polymer electrolyte membrane 100 and the catalyst particles 300, but a larger interface between the catalyst layer and the adhesive layer 200 along the surface curve of the catalyst particles 300, the adhesive layer 200 can increase the ion transport pathway and improve adhesion strength.

The adhesive layer preferably has an average thickness ranging from about 20 to about 1,000 nm and in another embodiment, from about 100 to about 500 nm. When the adhesive layer has a thickness of about 20 nm or greater, the adhesive layer is permeated into the catalyst layer more deeply than the surface roughness of the catalyst layer, preventing resistance increase. In other words, the adhesive layer not only fills the pores directly at the surface (i.e. surface recesses), but also fills underlying surface pores of the catalyst layer to a predetermined depth.

The adhesive layer is preferably permeated into the catalyst layer to an average depth of from 1 to 10 % based on the entire thickness of the catalyst layer before formation of the adhesive layer, or to an average depth of from 2 to 5 % based on the entire thickness of the catalyst layer before formation of the adhesive layer in another embodiment. When the permeation depth is within this range, adhesion between the catalyst layer and the adhesive layer can be optimized, and as a result, excellent output performance can be achieved.

The adhesive layer may include a polymer selected from the group consisting of the material used as anode catalyst binder material, the material used as cathode catalyst binder material, the polymer used to form the polymer electrolyte membrane, and combinations thereof.

Where an adhesive layer according to the present invention is not used, interface adherence between the polymer electrolyte membrane and a catalyst layer can be poor. For example, when the polymer electrolyte membrane is made of a polyarylene ether polymer, and a catalyst layer includes a proton conductive perfluoro polymer, the polymer electrolyte membrane and catalyst layer have an interface where they might be separated due to a difference in the contraction/expansion rates of the polyarylene ether polymer and proton conductive perfluoro polymer. A proton conductive perfluoro polymer included in a catalyst layer as a binder directly contacts with a small area of the polymer electrolyte membrane, and adhesion strength is low at an interface without the proton conductive perfluoro polymer. Furthermore, high temperature and pressure are required for adhering the polyarylene ether polymer, which has a high softening point. However, the use of high temperature and pressure is disadvantageous, because the proton conductive perfluoro polymer included in a catalyst layer can be changed in shape and deteriorated due to high temperature and pressure. By using an adhesive layer in accordance with the present invention, the adhesive layer can be adhered to a catalyst layer at a lower temperature, thereby reducing undesirable shape changes and degradation.

In one embodiment of the present invention, an adhesive layer disposed at an interface between the polymer electrolyte membrane and catalyst layer improves interface adherence.

When the adhesive layer includes a proton conductive perfluoro polymer, for example, then the adhesive layer can be adhered to a catalyst layer at a lower temperature than the softening point of the polyarylene ether polymer resulting in prevention of changes and degradation.

The polymer electrolyte membrane may include a polymer including a main chain selected from the group consisting of aryleneether, arylenesulfone, arylenesulfide, benzimidazole, imide, etherimide, aryleneethersulfone, aryleneetherketone, aryleneether-etherketone, phenylquinoxaline, and a combination thereof, and a proton conductive group. The proton conductive group may be a functional group selected from the group consisting of a sulfonic acid group, a carboxylic acid group, a phosphoric acid group, a phosphonic acid group, and derivatives thereof.

The polymer electrolyte membrane may include a polymer including a structural unit represented by the following Chemical Formula 1.

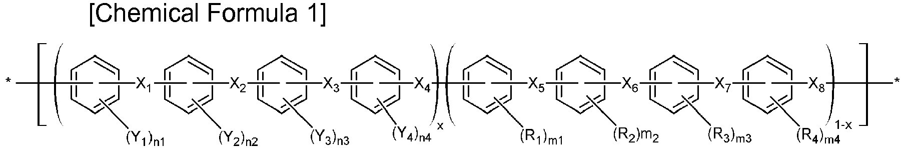

In the above Chemical Formula 1,
X₁ to X₈ are the same or different, and selected from the group consisting of O, S, CO, SO₂, and CRR' (where R and R' are the same or different, and selected from the group consisting of hydrogen, a C₁ to C₁₀ alkyl group, or a C₁ to C₁₀ fluoroalkyl group),
Y₁ to Y₄ are the same or different, and selected from the group consisting of hydrogen, a C₁ to C₁₀ alkyl group, or a C₁ to C₁₀ fluoroalkyl group, or a proton conductive group, provided that at least one of Y₁ to Y₄ is a proton conductive group,
n1 to n4 are the same or different, and are integers ranging from 1 to 4,
R₁ to R₄ are the same or different, and are selected from the group consisting of hydrogen, a C₁ to C₁₀ alkyl group, or a C₁ to C₁₀ fluoroalkyl group,
m1 to m4 are the same or different, and are integers ranging from 1 to 4, and
x ranges from about 0.1 to about 0.9, preferably 0.2 to 0.8.

The proton conductive group may be a functional group selected from the group consisting of a sulfonic acid group, a carboxylic acid group, a phosphoric acid group, a phosphonic acid group, and derivatives thereof.

The catalyst layer may include a metal catalyst selected from the group consisting of platinum, ruthenium, osmium, platinum-ruthenium alloy, platinum-osmium alloy, platinum-palladium alloy, platinum-M alloy (M is a transition element selected from the group consisting of gallium (Ga), titanium (Ti), vanadium (V), chromium (Cr), manganese (Mn), iron (Fe), cobalt (Co), nickel (Ni), copper (Cu), zinc (Zn), and combinations thereof), and combinations thereof, but is not limited thereto.

The catalyst may be supported by a carrier. The carrier may be selected from the group consisting of a carbon-based material, an inorganic material particulate, and a combination thereof. In particular, the carbon-based material may include graphite, denka black, ketjen black, acetylene black, carbon nanotube, carbon nano fiber, carbon nano wire, carbon nano ball, activated carbon, or the like. The inorganic material particulate may include alumina, silica, zirconia, titania, and the like.

Each catalyst layer preferably also includes a binder material to improve proton transport and adherence.

The binder may include a polymer resin having proton conductivity and is preferably any polymer resin having a proton conductive group selected from the group consisting of a sulfonic acid group, a carboxylic acid group, a phosphoric acid group, a phosphonic acid group, and derivatives thereof. In particular, it may include at least one proton conductive polymer selected from the group consisting of a proton conductive group-containing fluorine-based polymer, a proton conductive group-containing benzimidazole-based polymer, a proton conductive group-containing imide-based polymer, a proton conductive group-containing etherimide-based polymer, a proton conductive group-containing phenylenesulfide-based polymer, a proton conductive group-containing sulfone-based polymer, a proton conductive group-containing ethersulfone-based polymer, a proton conductive group-containing etherketone-based polymer, a proton conductive group-containing ether-etherketone-based polymer, or a proton conductive group-containing phenylquinoxaline-based polymer, and preferably, at least one proton conductive polymer selected from the group consisting of poly(perfluorosulfonic acid), poly(perfluorocarboxylic acid), a sulfonic acid group-containing copolymer of tetrafluoroethylene and fluorovinylether, a sulfonic acid group-containing sulfide polyetherketone, a sulfonic acid group-containing aryl ketone, a sulfonic acid group-containing poly(2,2'-m-phenylene)-5,5'-bibenzimidazole, or a sulfonic acid group-containing poly(2,5-benzim idazole).

The proton conductive polymer may include a positive ion exchange group including Na, K, Li, Cs, or tetrabutyl ammonium substituted for H at the side chain. When Na is substituted for hydrogen (H) at the side chain, NaOH may be used to prepare a catalyst composition. When tetrabutyl ammonium is substituted for H, tetrabutyl ammonium hydroxide may be used. K, Li, or Cs can also substituted for H by using an appropriate compound. This substitution method is well-known in this related field and need not be illustrated in detail here. In addition, the proton conductive polymer including Na, K, Li, Cs, or tetrabutyl ammonium substituted for H may be sulfonized again, when a catalyst layer is treated with sulfuric acid and thus, converted back into a proton type.

The above binder polymer resins may be used singly or as a mixture and in addition, may be selectively used with a non-conductive compound to improve adherence to a polymer electrolyte membrane.

The non-conductive compound may include at least one selected from the group consisting of polytetrafluoroethylene (PTFE), a tetra fluoroethylene-hexafluoropropylene copolymer (FEP), a tetrafluoroethylene-perfluoro alkylvinylether copolymer (PFA), an ethylene/tetrafluoroethylene (ETFE) copolymer, an ethylenechlorotrifluoro-ethylene copolymer (ECTFE), polyvinylidenefluoride, a polyvinylidenefluoride-hexafluoropropylene copolymer (PVdF-HFP), dodecylbenzenesulfonic acid, and sorbitol.

The electrode substrate plays a role of supporting an electrode and diffusing a fuel and an oxidizing agent into a catalyst layer, so that the fuel and the oxidizing agent can easily reach the catalyst layer. The electrode substrate may be conductive and representatively include carbon paper, carbon cloth, carbon felt, or metal cloth (a porous film made of metal fiber or a metal film formed on the surface of a polymer fiber cloth) but is not limited thereto.

In addition, the electrode substrate may include a fluorine-based resin treated with a water-repellent, which can prevent reactant diffusion efficiency deterioration by water generated when a fuel cell is operated. The fluorine-based resin may include polytetrafluoroethylene, polyvinylidene fluoride, polyhexafluoropropylene, polyperfluoroalkylvinylether, polyperfluorosulfonylfluoridealkoxyvinyl ether, fluorinated ethylene propylene, polychlorotrifluoroethylene, or a copolymer thereof.

In addition, a microporous layer may be further included to promote reactant diffusion into the electrode. The microporous layer may generally include conductive powder with a small particle diameter, for example, carbon powder, carbon black, acetylene black, activated carbon, carbon fiber, fullerene, carbon nanotube, carbon nano wire, carbon nano-horn, or carbon nano ring.

The microporous layer may be coated by a composition including conductive powder, a binder resin, and a solvent on the electrode substrate. The binder resin may include polytetrafluoroethylene, polyvinylidenefluoride, polyhexafluoropropylene, polyperfluoroalkylvinylether, polyperfluorosulfonylfluoride, alkoxyvinyl ether, polyvinylalcohol, celluloseacetate, or a copolymer thereof. The solvent may include alcohol such as ethanol, isopropylalcohol, n-propylalcohol, butanol, and the like, water, dimethyl acetamide, dimethylsulfoxide, N-methylpyrrolidone, tetrahydrofuran, and the like. The coating may include screen printing, spray coating, or doctor blade depending on viscosity of a composition but is not limited thereto.

Another embodiment of the present invention provides a method of manufacturing a membrane-electrode assembly for a fuel cell, which includes forming an anode catalyst layer on an anode substrate; forming a cathode catalyst layer on a cathode substrate; applying an adhesive layer to the cathode catalyst layer and/or to the anode catalyst layer in a manner effective to permeate the adhesive layer into the surface pores of the respective catalyst layer; and adhering the anode catalyst layer and the cathode catalyst layer to either side of a polymer electrolyte membrane.

The adhesive layer may be disposed using a gel-phase adhesive layer composition. The gel-phase adhesive layer composition includes a polymer and a solvent. The polymer may be selected from the group consisting of a binder for the catalyst layer, a polymer for the polymer electrolyte membrane, and a combination thereof. The solvent may include an alcohol such as ethanol, isopropylalcohol, n-propylalcohol, butanol, and the like, water, dimethyl acetamide, dimethylsulfoxide, N-methylpyrrolidone, tetrahydrofuran, and the like.

The adhesive layer may be disposed on the polymer electrolyte membrane by spray-coating an adhesive layer composition. When the adhesive layer composition is spray-coated, the adhesive layer does not permeate excessively into the catalyst layer, but is coated on the surface of the catalyst layer, filling the surface pores. In this spray-coating, the polymer solution may be partly volatilized during the spray-coating, and thus coated with higher viscosity on the surface of the catalyst layer. Accordingly, it may be less permeated into the catalyst layer, but selectively permeated into the underlying surface pores of the catalyst layer to a predetermined depth.

The average thickness of the adhesive layer is preferably about 20 to about 1,000 nm, or about 100 to about 500 nm thick. The adhesive layer may include a polymer selected from the group consisting of the material used as a binder for the anode and/or cathode catalyst layer, the polymer used to form the polymer electrolyte membrane, and combinations thereof, and for example a proton conductive perfluoro polymer such as poly(perfluorosulfonic acid).

Another embodiment of the present invention provides a fuel cell system including at least one electrical generator, a fuel supply, and an oxidizing agent supply. The at least one electrical generator includes the above-described membrane-electrode assembly for a fuel cell and a separator.

The electrical generator plays a role of generating electricity through oxidation of a fuel and reduction of an oxidizing agent. The fuel supply supplies the electrical generator with a fuel, while the oxidizing agent supply provides the electrical generator with an oxidizing agent such as oxygen or air.

The fuel may include a hydrogen or hydrocarbon fuel in a gas or liquid state. The hydrocarbon fuel may representatively include methanol, ethanol, propanol, butanol, or natural gas.

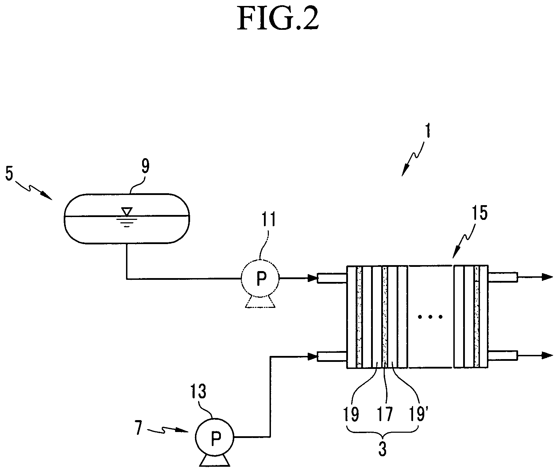

FIG. 2 shows a schematic structure of the fuel cell system, which will be described in detail with the reference to the accompanying drawing as follows. FIG. 2 shows a system of supplying an electrical generator with a fuel and an oxidizing agent using a pump, but the fuel cell system is not limited thereto and may adopt a diffusion method instead of a pump.

The fuel cell system 1 includes at least one electrical generator 3 generating electricity through oxidation of a fuel and reduction of an oxidizing agent, a fuel supply 5 supplying the electrical generator 3 with a fuel, and an oxidizing agent supply 7 supplying the electrical generator 3 with an oxidizing agent.

The fuel supply 5 may be equipped with a fuel tank 9 storing a fuel, and a fuel pump 11 connected to the fuel tank 9. The fuel pump 11 discharges a fuel stored in a fuel tank 9 with a predetermined pumping power.

The oxidizing agent supply 7 supplying the electrical generator 3 with an oxidizing agent may be equipped with at least one oxidizing agent pump 13 pumping an oxidizing agent with a predetermined pumping power.

The electrical generator 3 includes a membrane-electrode assembly 17 oxidizing a fuel and reducing an oxidizing agent, separators 19 and 19' for supplying a fuel and an oxidizing agent at both sides of the membrane-electrode assembly. More than at least one electrical generator 3 are stacked into a stack 15.

Hereinafter, Examples are used to illustrate other aspects of the present invention in more detail. However, the following Examples are presented for explanation but do not limit the present invention.

### Example 1

Ionomer powder was prepared by spray-drying and lyophilizing a nafion (DuPont Co.) ionomer dispersion. 0.86 g of the ionomer powder was dissolved in 7.71 g of dipropylene glycol, and 2 g of a catalyst powder was added thereto. The mixture was agitated and then 7.54 g of water was added thereto. The resulting mixture was sufficiently stirred, preparing a composition for a catalyst layer. As for a cathode catalyst, a TEC36E51 PtCo/C catalyst made by Tanaka Co., Ltd was used. As for an anode catalyst, TEC61 E54 PtRu/C made by Tanaka Co., Ltd was used.

The composition for a cathode catalyst layer and an anode catalyst layer were coated respectively on a cathode substrate and an anode substrate, and sufficiently vacuum-dried at about 60 ° C. The dried resulting products were sufficiently boiled in 100 ° C water and dried again, thereby fabricating films for catalyst layers, and thereby a cathode and an anode were fabricated.

Herein, the cathode includes a loading amount of 0.25 mg catalyst /cm² and the anode includes an amount of 0.35 mg catalyst /cm².

Then, an adhesive layer composition was prepared by combining 20 parts by weight of Nafion based on 100 parts by weight of water/isopropylalcohol mixed in a volume ratio of 50/50, and agitating the mixture. This adhesive layer composition was spray-coated on the catalyst layers of the cathode and anode at room temperature in an amount of 0.1 mg/cm² to form a 500 nm-thick adhesive layer on the surface of the catalyst layer.

The cathode and anode were disposed on both sides of a polymer electrolyte membrane including a sulfonized polyarylene ether-based polymer of Chemical Formula 2, hot-rolled together at 150 ° C in order to adhere the electrolyte membrane to the catalyst layers of the cathode and anode, thereby fabricating a membrane-electrode assembly.

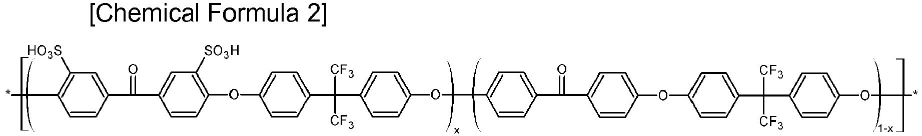

In the above Chemical Formula 2, x is 0.5.

The membrane-electrode assembly was inserted between gaskets and also between two separators including a gas passage channel and a cooler channel having a predetermined shape, and then compressed between end plates, thereby fabricating a single cell.

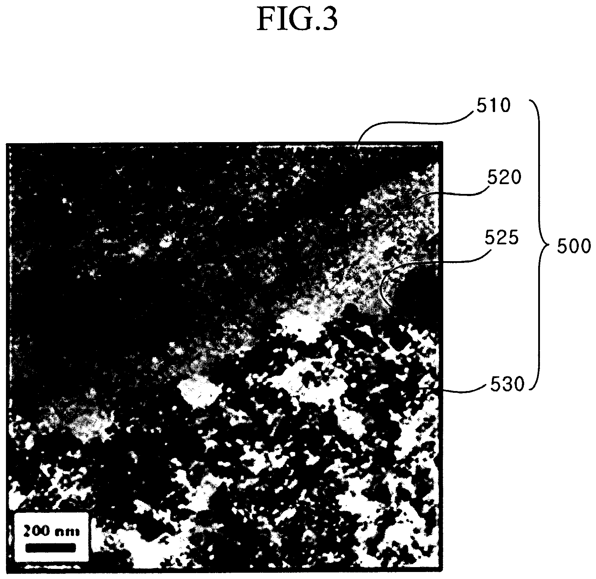

FIG. 3 is a scanning electron microscope (SEM) photograph of the interface structure 500 of a polymer electrolyte membrane 510, an adhesive layer 520, and a catalyst layer 530 in a membrane-electrode assembly for a fuel cell according to one embodiment of the present invention. As shown in FIG. 3, an interface 525 indicates the area where the adhesive layer 520 is permeated into the catalyst layer 530.

### Example 2

A membrane-electrode assembly and a single cell were produced according to the same method as Example 1 except for forming an 800 nm-thick adhesive layer on the surface of a catalyst layer by spray-coating an adhesive layer composition in an amount of 0.15 mg catalyst /cm² instead of forming a 500 nm-thick adhesive layer on the surface of a catalyst layer by spray-coating an adhesive layer composition in an amount of 0.1 mg/cm².

### Comparative Example 1

A membrane-electrode assembly and a single cell were fabricated according to the same method as Example 1 except for forming no adhesive layer on the surface of a catalyst layer.

### Evaluation 1; Output characteristic

Air and hydrogen were injected into each cathode and anode of the single cell according to Examples 1 to 2 and Comparative Example 1. Then, the single cells were measured regarding current-voltage characteristic curve.

The cells were maintained at 60 ° C and had air and hydrogen usage rates of respectively 50 % and 83.3 %. The gas was controlled to maintain humidity of 80 % based on 60 ° C. The cathode and the anode were controlled to maintain a high back pressure.

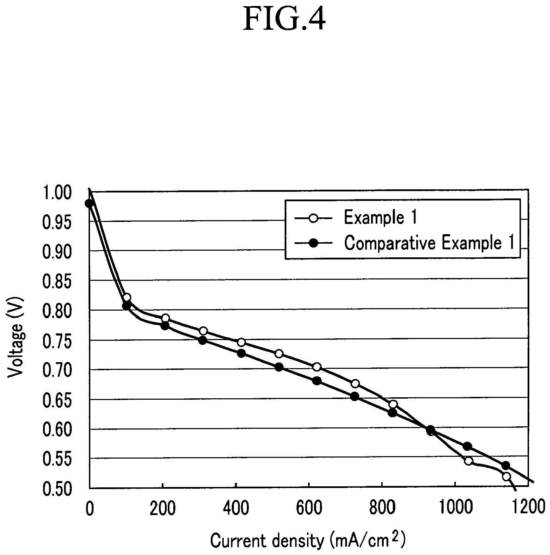

FIG. 4 is a graph comparing current-voltage characteristics of single cells according to Example 1 and Comparative Example 1.

Referring to FIG. 4, Example 1 had excellent output characteristics compared with Comparative Example 1. Compared with their output performances at 0.7 V, Comparative Example 1 had 371 mW/cm², while Example 1 had 441 mW/cm². Example 1 had about 19 % better output performance than Comparative Example 1.

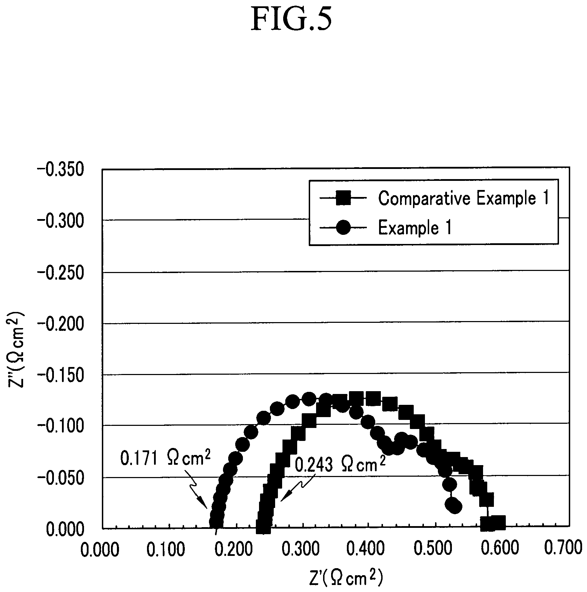

FIG. 5 is a graph showing AC impedance comparison of Example 1 and Comparative Example 1 under 300 mA/cm² constant current condition.
the x axis is the real number (Z') of impedance, while the y axis is the imaginary number (Z") of the impedance. The real number value at a point where an impedance curve line meets with the x axis is an ohmic resistance and shows a resistance component including membrane and interface resistances.

The single cell according to Example 1 had 0.171 Ωcm² of interface resistance, while the single cell according to Comparative Example 1 had 0.243 Ωcm² of interface resistance. Accordingly, the single cell according to Example 1 had 30 % lower resistance than Comparative Example 1. Example 1 and Comparative Example 1 included the same membrane but differed in including an adhesive layer on the interface. Accordingly, their ohmic resistance difference comes from the interface resistance difference. The adhesive layer disposed on the interface improved proton transportation on the interface and thereby decreased interface resistance and improved output performance.

### Evaluation 2; Interface adherence

The single cells according to Examples 1 and 2 and Comparative Example 1 were evaluated regarding interface adherence by being maintained at 60 ° C and injecting nitrogen into each cathode and anode. The nitrogen was repeatedly injected by being humidified and dried and thus, repeatedly caused contraction and expansion of the membrane-electrode assembly due to the drying and hydration. The nitrogen was 100 % humidified and dried and repeatedly injected every 10 minutes. The humidified and dried nitrogen was once injected as one cycle (20 minutes in total). After 5,000 cycles in total, ohmic resistances of the cells were compared and are provided in the following Table 1.

**Table 1**

| | Ohmic resistance [Ωcm²] before Acceleration evaluation | Ohmic resistance [Ωcm²] after Acceleration evaluation | Increase [%] |
|---|---|---|---|
| Example 1 | 0.171 | 0.203 | 18.7 |
| Example 2 | 0.195 | 0.205 | 5.1 |
| Comparative Example 1 | 0.243 | 0.982 | 304.1 |

As shown in Table 1, the single cell of Comparative Example 1 including no adhesive layer had 404.3 % increased resistance than initial resistance. The single cell according to Example 1 including an adhesive layer in an amount of 0.1 mg/cm² on the catalyst layer had 18.7 % increased resistance than initial resistance. Comparison of Comparative Example 1 and Example 1 shows interface adhesion stability improvement due to the adhesive layer coated on the catalyst layer. The single cell according to Example 2 showed a low ohmic resistance increase.

While this disclosure has been described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

1. A membrane-electrode assembly for a fuel cell, comprising, in order:
an anode substrate;
an anode catalyst layer;
a polymer electrolyte membrane;
a cathode catalyst layer; and
a cathode substrate,
wherein an adhesive layer is provided between the anode catalyst layer and the polymer electrolyte membrane and/or between the cathode catalyst layer and the polymer electrolyte membrane, and **characterised in that** the or each adhesive layer is permeated into the surface pores of the respective catalyst layer and the adhesive layer fills empty spaces between catalyst particles at the surface of the catalyst layer, and the space between the catalyst layer and the polymer electrolyte membrane.

2. A membrane electrode assembly according to Claim 1, wherein the or each adhesive layer is permeated into the surface pores of the respective catalyst layer to an average depth of from 1% to 10%, preferably from 2 to 5%, based on the total thickness of catalyst layer.

3. A membrane electrode assembly according to Claim 1 or Claim 2, wherein an adhesive layer is provided both between the anode catalyst layer and the polymer electrolyte membrane, and between the cathode catalyst layer and the polymer electrolyte membrane.

4. A membrane electrode assembly according to any preceding claim, wherein the average thickness of the or each adhesive layer is from 20 nm to 1000 nm, preferably from 100 to 500 nm.

5. A membrane electrode assembly according to any preceding claim, wherein the anode catalyst layer comprises an anode catalyst material and an anode catalyst binder material, and wherein the cathode catalyst layer comprises a cathode catalyst material and a cathode catalyst binder material.

6. A membrane electrode assembly according to any preceding claim, wherein the or each adhesive layer comprises a proton-conducting polymer.

7. A membrane electrode assembly according to Claim 6, wherein the proton-conducting polymer comprised in the adhesive layer is selected from the group consisting of the material used as anode catalyst binder material, the material used as cathode catalyst binder material, the polymer used to form the polymer electrolyte membrane, and combinations thereof.

8. A membrane electrode assembly according to Claim 6, wherein the proton-conducting polymer comprised in the adhesive layer is a perfluoro polymer, preferably a perfluorosulfonic acid/ polytetrafluoroethane copolymer.

9. A membrane electrode assembly according to any preceding claim, wherein the polymer electrolyte membrane comprises a polymer comprising a main chain selected from the group consisting of aryleneether, arylenesulfone, arylenesulfide, benzimidazole, imide, etherimide, aryleneethersulfone, aryleneetherketone, aryleneether-etherketone, phenylquinoxaline, and combinations thereof, and a proton-conducting group selected from the group consisting of a sulfonic acid group, a carboxylic acid group, a phosphoric acid group, a phosphonic acid group, and derivatives thereof.

10. A membrane electrode assembly according to Claim 9, wherein the polymer electrolyte membrane comprises a polymer comprising a structural unit represented by the following Formula I: 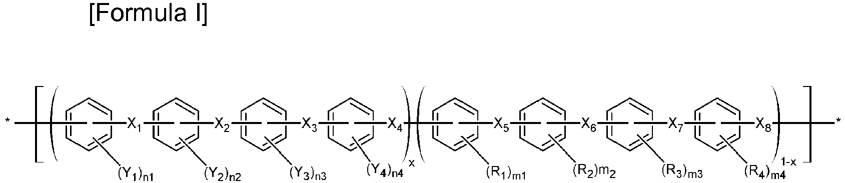 wherein:
X₁ to X₈ are the same or different, and selected from the group consisting of O, S, CO, SO₂, and CRR', where R and R' are the same or different and selected from the group consisting of hydrogen, a C₁ to C₁₀ alkyl group, or a C₁ to C₁₀ fluoroalkyl group,
Y₁ to Y₄ are the same or different, and selected from the group consisting of hydrogen, a C₁ to C₁₀ alkyl group, or a C₁ to C₁₀ fluoroalkyl group, or a proton conductive group, provided that at least one of Y₁ to Y₄ is a proton conductive group,
n1 to n4 are the same or different, and are integers ranging from 1 to 4,
R₁ to R₄ are the same or different, and selected from the group consisting of hydrogen, a C₁ to C₁₀ alkyl group, or a C₁ to C₁₀ fluoroalkyl group,
m1 to m4 are the same or different, and are integers ranging from 1 to 4, and
x ranges from 0.1 to 0.9.

11. A method for manufacturing the membrane-electrode assembly according to any preceding claim, wherein:
an anode catalyst layer is formed on an anode substrate;
a cathode catalyst layer is formed on a cathode substrate;
an adhesive layer is applied to the cathode catalyst layer and/or to the anode catalyst layer in a manner effective to permeate the adhesive layer into the surface pores of the cathode catalyst layer and/or into the surface pores of the anode catalyst layer;
and the anode catalyst layer and the cathode catalyst layer are then adhered to either side of a polymer electrolyte membrane, wherein the adhesive layer is applied in the form of a gel-phase adhesive layer composition or the adhesive layer is applied by spray coating.

12. A method according to Claim 11, wherein the anode catalyst layer and the cathode catalyst layer are adhered to either side of the polymer electrolyte membrane by hot rolling.

13. A fuel cell system comprising:
at least one electrical generator,
a fuel supply, and
an oxidising agent supply,
wherein the at least one electrical generator comprises one or more membrane-electrode assemblies according to any of Claims 1-10.

## Patentansprüche

1. Membranelektrodeneinheit für eine Brennstoffzelle, umfassend, in Reihenfolge:
ein Anodensubstrat;
eine Anodenkatalysatorschicht;
eine Polymerelektrolytmembran;
eine Kathodenkatalysatorschicht; und
ein Kathodensubstrat,
wobei eine Klebeschicht zwischen der Anodenkatalysatorschicht und der Polymerelektrolytmembran und/oder zwischen der Kathodenkatalysatorschicht und der Polymerelektrolytmembran bereitgestellt ist, und
**dadurch gekennzeichnet, dass**
die oder jede Klebeschicht in die Oberflächenporen der jeweiligen Katalysatorschicht eingedrungen ist und die Klebeschicht Leerräume zwischen Katalysatorteilchen an der Oberfläche der Katalysatorschicht und den Raum zwischen der Katalysatorschicht und der Polymerelektrolytmembran füllt.

2. Membranelektrodeneinheit nach Anspruch 1, wobei die oder jede Klebeschicht in die Oberflächenporen der jeweiligen Katalysatorschicht bis zu einer Durchschnittstiefe von 1 % bis 10 %, bevorzugt von 2 bis 5 % basierend auf der Gesamtdicke der Katalysatorschicht eingedrungen ist.

3. Membranelektrodeneinheit nach Anspruch 1 oder Anspruch 2, wobei eine Klebeschicht sowohl zwischen der Anodenkatalysatorschicht und der Polymerelektrolytmembran als auch zwischen der Kathodenkatalysatorschicht und der Polymerelektrolytmembran bereitgestellt ist.

4. Membranelektrodeneinheit nach einem vorangehenden Anspruch, wobei die Durchschnittsdicke der oder jeder Klebeschicht von 20 nm bis 1000 nm, bevorzugt von 100 bis 500 nm beträgt.

5. Membranelektrodeneinheit nach einem der vorangehenden Ansprüche, wobei die Anodenkatalysatorschicht ein Anodenkatalysatormaterial und ein Anodenkatalysatorbindematerial umfasst, und wobei die Kathodenkatalysatorschicht ein Kathodenkatalysatormaterial und ein Kathodenkatalysatorbindematerial umfasst.

6. Membranelektrodeneinheit nach einem vorangehenden Anspruch, wobei die oder jede Klebeschicht ein protonleitendes Polymer umfasst.

7. Membranelektrodeneinheit nach Anspruch 6, wobei das protonleitende Polymer, das in der Klebeschicht enthalten ist, aus der Gruppe ausgewählt ist, bestehend aus dem Material, das als Anodenkatalysatorbindematerial verwendet wird, dem Material, das als Kathodenkatalysatorbindematerial verwendet wird, dem Polymer, das verwendet wird, um die Polymerelektrolytmembran zu bilden, und Kombinationen davon.

8. Membranelektrodeneinheit nach Anspruch 6, wobei das protonleitende Polymer, das in der Klebeschicht enthalten ist, ein Perfluorpolymer, bevorzugt ein Perfluorsulfonsäure-/Polytetrafluorethan-Copolymer ist.

9. Membranelektrodeneinheit nach einem vorangehenden Anspruch, wobei die Polymerelektrolytmembran ein Polymer umfasst, das eine Hauptkette umfasst, ausgewählt aus der Gruppe bestehend aus Arylenether, Arylensulfon, Arylensulfid, Benzimidazol, Imid, Etherimid, Arylenethersulfon, Arylenetherketon, Arylenether-Etherketon, Phenylchinoxalin und Kombinationen davon, und eine protonleitende Gruppe, ausgewählt aus der Gruppe bestehend aus einer Sulfonsäuregruppe, einer Carbonsäuregruppe, einer Phosphorsäuregruppe, einer Phosphonsäuregruppe und Derivaten davon.

10. Membranelektrodeneinheit nach Anspruch 9, wobei die Polymerelektrolytmembran ein Polymer umfasst, das eine Struktureinheit umfasst, die durch die folgende Formel I dargestellt ist: 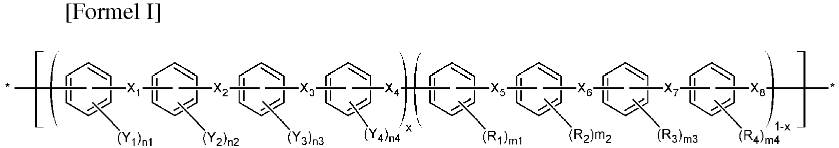 wobei:
X₁ bis X₈ gleich oder unterschiedlich sind und ausgewählt sind aus der Gruppe bestehend aus O, S, CO, SO₂ und CRR', wobei R und R' gleich oder unterschiedlich sind und ausgewählt sind aus der Gruppe bestehend aus Wasserstoff, einer C₁- bis C₁₀-Alkylgruppe oder einer C₁- bis C₁₀-Fluoralkylgruppe,
Y₁ bis Y₄ gleich oder unterschiedlich sind und ausgewählt sind aus der Gruppe bestehend aus Wasserstoff, einer C₁- bis C₁₀-Alkylgruppe oder einer C₁- bis C₁₀-Fluoralkylgruppe, oder einer Protonenleitgruppe, vorausgesetzt, dass mindestens eines aus Y₁ bis Y₄ eine Protonenleitgruppe ist,
n1 bis n4 gleich oder unterschiedlich sind und Ganzzahlen sind, die von 1 bis 4 reichen,
R₁ bis R₄ gleich oder unterschiedlich sind und ausgewählt sind aus der Gruppe bestehend aus Wasserstoff, einer C₁- bis C₁₀-Alkylgruppe oder einer C₁- bis C₁₀-Fluoralkylgruppe,
m1 bis m4 gleich oder unterschiedlich sind, und Ganzzahlen sind, die von 1 bis 4 reichen, und
x von 0,1 bis 0,9 reicht.

11. Verfahren zur Herstellung der Membranelektrodeneinheit nach einem vorangehenden Anspruch, wobei:
eine Anodenkatalysatorschicht auf einem Anodensubstrat gebildet ist;
eine Kathodenkatalysatorschicht auf einem Kathodensubstrat gebildet ist;
eine Klebeschicht auf die Kathodenkatalysatorschicht und/oder die Anodenkatalysatorschicht auf eine Weise aufgetragen ist, die wirksam ist, um die Klebeschicht in die Oberflächenporen der Kathodenkatalysatorschicht und/oder in die Oberflächenporen der Anodenkatalysatorschicht eindringen zu lassen;
und die Anodenkatalysatorschicht und die Kathodenkatalysatorschicht dann an beiden Seiten einer Polymerelektrolytmembran befestigt werden, wobei die Klebeschicht in Form einer Gelphasenklebeschichtzusammensetzung aufgetragen wird oder die Klebeschicht durch Sprühbeschichten aufgetragen wird.

12. Verfahren nach Anspruch 11, wobei die Anodenkatalysatorschicht und die Kathodenkatalysatorschicht durch Warmwalzen an beiden Seiten der Polymerelektrolytmembran befestigt werden.

13. Brennstoffzellensystem, umfassend:
mindestens einen elektrischen Generator,
eine Brennstoffzufuhr, und
eine Oxidationsmittelzufuhr,
wobei der mindestens eine elektrische Generator eine oder mehrere Membranelektrodeneinheiten nach einem der Ansprüche 1-10 umfasst.

## Revendications

1. Ensemble membrane-électrode pour une pile à combustible, comprenant, dans l'ordre :
un substrat d'anode ;
une couche de catalyseur d'anode ;
une membrane d'électrolyte de polymère ;
une couche de catalyseur de cathode ; et
un substrat de cathode ; dans lequel :
une couche d'adhésif est disposée entre la couche de catalyseur d'anode et la membrane d'électrolyte de polymère et/ou entre la couche de catalyseur de cathode et la membrane d'électrolyte de polymère ; et
**caractérisé en ce que** :
la ou chaque couche d'adhésif est imprégnée à l'intérieur des pores de surface de la couche de catalyseur respective, et la couche d'adhésif remplit des espaces vides entre des particules de catalyseur au niveau de la surface de la couche de catalyseur ainsi que l'espace entre la couche de catalyseur et la membrane d'électrolyte de polymère.

2. Ensemble membrane-électrode selon la revendication 1, dans lequel la ou chaque couche d'adhésif est imprégnée à l'intérieur des pores de surface de la couche de catalyseur respective jusqu'à une profondeur moyenne qui va de 1 % à 10 %, de préférence de 2 % à 5 %, sur la base de l'épaisseur totale de couche de catalyseur.

3. Ensemble membrane-électrode selon la revendication 1 ou la revendication 2, dans lequel une couche d'adhésif est disposée à la fois entre la couche de catalyseur d'anode et la membrane d'électrolyte de polymère ainsi qu'entre la couche de catalyseur de cathode et la membrane d'électrolyte de polymère.

4. Ensemble membrane-électrode selon l'une quelconque des revendications qui précèdent, dans lequel l'épaisseur moyenne de la ou chaque couche d'adhésif va de 20 nm à 1000 nm, de préférence de 100 nm à 500 nm.

5. Ensemble membrane-électrode selon l'une quelconque des revendications qui précèdent, dans lequel la couche de catalyseur d'anode comprend un matériau de catalyseur d'anode et un matériau de liant de catalyseur d'anode, et dans lequel la couche de catalyseur de cathode comprend un matériau de catalyseur de cathode et un matériau de liant de catalyseur de cathode.

6. Ensemble membrane-électrode selon l'une quelconque des revendications qui précèdent, dans lequel la ou chaque couche d'adhésif comprend un polymère conducteur de protons.

7. Ensemble membrane-électrode selon la revendication 6, dans lequel le polymère conducteur de protons qui constitue la couche d'adhésif est sélectionné parmi le groupe qui est constitué par le matériau qui est utilisé en tant que matériau de liant de catalyseur d'anode, le matériau qui est utilisé en tant que matériau de liant de catalyseur de cathode, le polymère qui est utilisé pour former la membrane d'électrolyte de polymère et des combinaisons de ceux-ci.

8. Ensemble membrane-électrode selon la revendication 6, dans lequel le polymère conducteur de protons qui constitue la couche d'adhésif est un perfluoropolymère, de préférence un copolymère acide perfluorosulfonique/polytétrafluoroéthane.

9. Ensemble membrane-électrode selon l'une quelconque des revendications qui précèdent, dans lequel la membrane d'électrolyte de polymère comprend un polymère qui comprend une chaîne principale qui est sélectionnée parmi le groupe qui est constitué par arylène éther, arylène sulfone, arylène sulfure, benzimidazole, imide, étherimide, arylène éthersulfone, arylène éthercétone, arylène éther-éthercétone, phénylquinoxaline et des combinaisons de ceux-ci, et un groupe conducteur de protons qui est sélectionné parmi le groupe qui est constitué par un groupe acide sulfonique, un groupe acide carboxylique, un groupe acide phosphorique, un groupe acide phosphonique et des dérivés de ceux-ci.

10. Ensemble membrane-électrode selon la revendication 9, dans lequel la membrane d'électrolyte de polymère comprend un polymère qui comprend une unité structurelle qui est représentée par la formule I qui suit : 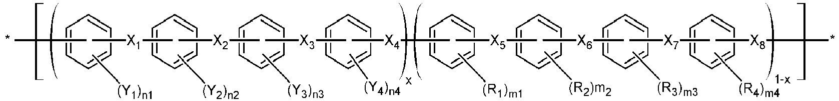 formule dans laquelle :
X₁ à X₈ sont les mêmes ou sont différents, et sont sélectionnés parmi le groupe qui est constitué par O, S, CO, SO₂ et CRR', où R et R' sont les mêmes ou sont différents et sont sélectionnés parmi le groupe qui est constitué par hydrogène, un groupe C₁ à C₁₀ alkyle et un groupe C₁ à C₁₀ fluoroalkyle ;
Y₁ à Y₄ sont les mêmes ou sont différents, et sont sélectionnés parmi le groupe qui est constitué par hydrogène, un groupe C₁ à C₁₀ alkyle, un groupe C₁ à C₁₀ fluoroalkyle et un groupe conducteur de protons, pourvu qu'au moins l'un de Y₁ à Y₄ soit un groupe conducteur de protons ;
n1 à n4 sont les mêmes ou sont différents, et sont des entiers qui s'inscrivent dans la plage qui va de 1 à 4 ;
R₁ à R₄ sont les mêmes ou sont différents, et sont sélectionnés parmi le groupe qui est constitué par hydrogène, un groupe C₁ à C₁₀ alkyle et un groupe C₁ à C₁₀ fluoroalkyle ;
m1 à m4 sont les mêmes ou sont différents, et sont des entiers qui s'inscrivent dans la plage qui va de 1 à 4 ; et
x s'inscrit dans la plage qui va de 0,1 à 0,9.

11. Procédé pour fabriquer l'ensemble membrane-électrode selon l'une quelconque des revendications qui précèdent, dans lequel :
une couche de catalyseur d'anode est formée sur un substrat d'anode ;
une couche de catalyseur de cathode est formée sur un substrat de cathode ;
une couche d'adhésif est appliquée sur la couche de catalyseur de cathode et/ou sur la couche de catalyseur d'anode d'une façon efficace de manière à imprégner la couche d'adhésif à l'intérieur des pores de surface de la couche de catalyseur de cathode et/ou à l'intérieur des pores de surface de la couche de catalyseur d'anode ; et
la couche de catalyseur d'anode et la couche de catalyseur de cathode sont ensuite amenées à adhérer sur l'un et l'autre côtés d'une membrane d'électrolyte de polymère, dans lequel la couche d'adhésif est appliquée sous la forme d'une composition de couche d'adhésif en phase gel ou la couche d'adhésif est appliquée au moyen d'un revêtement par pulvérisation.

12. Procédé selon la revendication 11, dans lequel la couche de catalyseur d'anode et la couche de catalyseur de cathode sont amenées à adhérer sur l'un et l'autre côtés de la membrane d'électrolyte de polymère au moyen d'un laminage à chaud.

13. Système de pile à combustible comprenant :
au moins un générateur électrique ;
une alimentation en combustible ; et
une alimentation en agent oxydant ; dans lequel :
l'au moins un générateur électrique comprend un ou plusieurs ensemble(s) membrane-électrode selon l'une quelconque des revendications 1 à 10.
